# EUROPEAN PATENT SPECIFICATION

(11) **EP 1 457 408 B1**
(45) Date of publication and mention of the grant of the patent: **11.04.2007**
(21) Application number: 04075373.3
(22) Date of filing: 06.02.2004
(51) Int. Cl.: B62D 25/20, B62D 29/00, B62D 29/04

(54) **Floor for a loading space of a vehicle and vehicle provided with such a floor**
Boden für einen Laderaum eines Fahrzeugs und mit einem solchen Boden ausgestattetes Fahrzeug
Sol pour l'espace de chargement d'un véhicule et véhicule pourvu d'un tel sol

(30) Priority: 17.02.2003 NL 1022712
(43) Date of publication of application: 15.09.2004
(73) Proprietor: Gwejo Harfsen B.V., 7217 RK Harfsen (NL)
(72) Inventor: Jonker, Laurentius Geertruda, 7217 RK Harfsen (NL)
(74) Representative: Dokter, Hendrik Daniel

(56) References cited:
- DE-A- 19 822 062
- GB-A- 2 200 600
- US-A- 5 772 276
- US-A- 5 863 091
- US-B1- 6 283 538
- US-B1- 6 347 454
- US-B1- 6 497 937

## Description

The invention relates to a floor for a loading space of a vehicle, comprising an assembly of a horizontal lower support layer in the situation of use, and an upper cover layer arranged thereon, the support layer comprising a profiled plate, which plate has a structure of parallel ribs for the purpose of resting the cover layer thereon. Such a floor is intended to be self-supporting and serves as an alternative to a wooden floor resting on steel cross beams.

A self-supporting floor is known for the loading space of a truck or trailer, which is manufactured from a laminate of successively a lower layer of polyester, an intermediate layer of a polycarbonate with a honeycomb structure and an upper cover layer of a polyester.

The known self-supporting floor has the advantage of having a relatively low weight per unit area, for instance 12 kg/m², but has the drawback that it sags somewhat under a heavy local load. The known floor is furthermore very expensive to purchase.

US patent No. 5 863 091 discloses a vehicle floor assembly, according to the preamble of claim 1, which is made up of a floor and a liner provided underneath and attached to the floor. No teaching however is given about the way this floor assembly is locked against torsion and bending in a direction transversely of the ribs.

US patent No. 6 283 538 B1 discloses a flatbed trailer design which comprises two main rails having dual webs and a plurality of shouldered cross members. These dual web main rails and shoudered cross members have top flanges that are formed by the upper plane of the flooring members. In addition, intermediate flooring supports are used between cross members.

It is an object of the invention to provide a self-supporting floor with a relatively low weight per unit area which is particularly rigid. It is a further object to provide such a floor which can be manufactured at a relatively low price.

These objectives are achieved with a floor of the type specified in the preamble, which floor according to the invention is provided with an edge profile extending along the side and over edge zones of the upper and lower side of this floor in a direction transversely of the ribs, enclosing the ribs at their ends.

An assembly of a lower support layer of a profiled plate and an upper cover layer arranged thereon, wherein the plate has a weight such that the weight per unit area of the assembly is in the same order of magnitude as that of the known self-supporting floor, has a surprisingly great rigidity. The edge profile imparts an extra rigidity to the floor and locks the floor against torsion and bending in a direction transversely of the ribs.

In an embodiment of a floor according to the invention, the ribs which are preferably flat on their upper side for the purpose of resting the cover layer thereon.

The profiled plate in this embodiment has for instance a square wave shape or a truncated zigzag profile in a cross-section perpendicularly of the ribs.

In order to prevent condensation moisture and to protect the profiled plate, an embodiment of a floor according to the invention comprises a filler material, for instance polyurethane foam, in spaces enclosed by the ribs and the cover layer.

The profiled plate in a floor according to the invention is for instance manufactured from plate iron, aluminium or a plastic material.

The cover layer in a floor according to the invention comprises for instance a pressed fibre material, a plastic material or a sheet metal.

In a practical advantageous embodiment of a floor according to the invention, the edge profile is provided with a downward extending longitudinal groove for receiving an upright wall therein.

A floor according to the invention is in principle suitable for application in a vehicle, irrespective of the orientation of the profiled plate relative to the longitudinal axis of the vehicle. In a floor provided with ribs however, the ribs preferably extend transversely of the longitudinal direction of the vehicle.

The invention therefore further relates to a vehicle provided with an above described floor with ribs, wherein the ribs extend transversely of the longitudinal direction of the vehicle. In such a vehicle the floor is for instance fixed on the central chassis beam of this vehicle, or on a longitudinal beam arranged for the purpose on this chassis beam.

The invention will be elucidated hereinbelow on the basis of exemplary embodiments and with reference to the drawings.

In the drawings
Fig. 1 shows a perspective side view of a first embodiment of part of a floor according to the invention,
Fig. 2 shows a rear view of a part of a truck provided with a floor as shown in fig. 1, and
Fig. 3 is a perspective side view of a second embodiment of part of a floor according to the invention.

Corresponding components are designated in the figures with the same reference numerals.

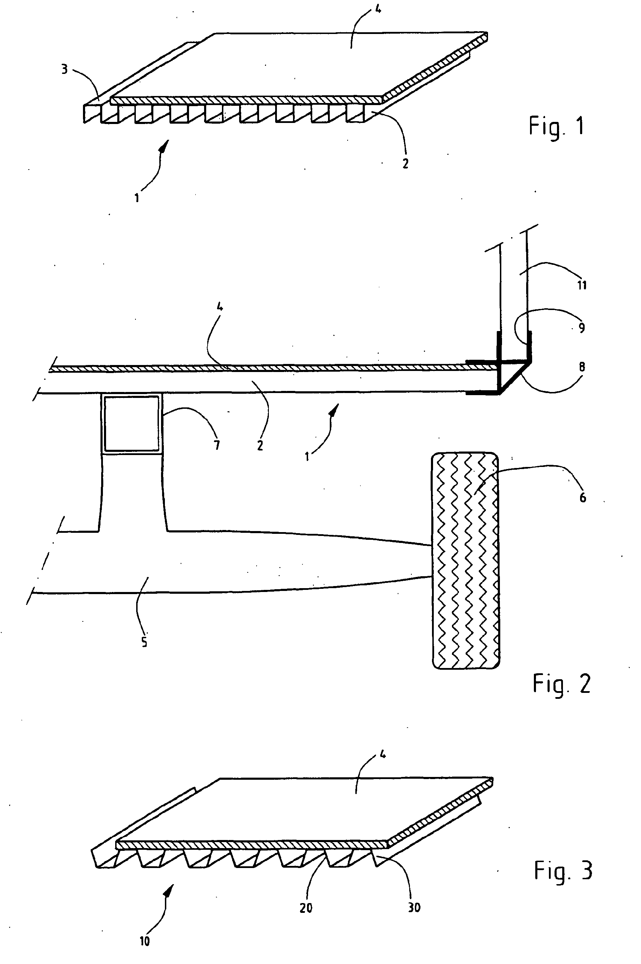

Fig. 1 shows a floor 1 which is assembled in the situation of use from a lower support layer 2 of plate iron which is profiled such that it comprises a periodic pattern of parallel ribs 3 which are flat on their top side and which in the shown side view have a square wave shape. A cover layer 4 of a pressed fibre material is fixed to support layer 2 in per se known manner, for instance by riveting or screwing. The height, width and mutual distance of ribs 3 amounts in this embodiment to 3 cm. With a plate thickness of 0.5 mm the weight per unit area of support layer 2 amounts to about 8 kg/m².

Fig. 2 shows in schematic form the rear of a truck, wherein a part of chassis 5 and a right rear wheel 6 are shown. Mounted on chassis 5 is a longitudinal beam 7, on which rests the floor 1 shown in fig. 1. The ribs of support layer 2 of floor 1 extend transversely of longitudinal beam 7 and are enclosed at their ends by an edge profile 8 which locks the floor against sagging and torsion. Edge profile 8 is provided with a downward extending longitudinal groove 9 in which a side wall 11 of the truck is received.

Fig. 3 shows a floor 10 which is assembled in the situation of use from a lower support layer 20 of plate iron which is profiled such that it comprises a pattern of parallel ribs 30 which are flat on their upper side and which in the shown side view have a truncated zigzag profile. A cover layer 4 is fixed to support layer 2 in per se known manner.

It is noted that the term "vehicle" in the foregoing must be understood to mean not only trucks and trailers, but also all rolling stock and mobile vehicles which are provided with a floor, such as semi-trailers, caravans, buses or railway wagons.

## Claims

1. Floor (1, 10) for a loading space of a vehicle, comprising an assembly of a horizontal lower support layer (2, 20) in the situation of use, and an upper cover layer (4) arranged thereon, the support layer (2, 20) comprising a profiled plate, which plate has a structure of parallel ribs (3, 30) for the purpose of resting the cover layer (4) thereon, **characterized in that** it is provided with an edge profile (8) extending along the side and over edge zones of the upper and lower side of said floor (1, 10) in a direction transversely of the ribs (3, 30), enclosing the ribs (3, 30) at their ends.

2. Floor (1) as claimed in claim 1, **characterized in that** the ribs (3, 30) are flat on their upper side.

3. Floor (1) as claimed in claim 2, **characterized in that** the profiled plate has a square wave shape in a cross-section perpendicularly of the ribs (3).

4. Floor (10) as claimed in claim 2, **characterized in that** the profiled plate has a truncated zigzag profile in a cross-section perpendicularly of the ribs (3).

5. Floor as claimed in any of the claims 1-4, **characterized in that** it comprises a filler material in spaces enclosed by the ribs (3, 30) and the cover layer (4).

6. Floor (1, 10) as claimed in any of the claims 1-5, **characterized in that** the profiled plate is manufactured from plate iron.

7. Floor (1, 10) as claimed in any of the claims 1-5, **characterized in that** the profiled plate is manufactured from aluminium.

8. Floor (1, 10) as claimed in any of the claims 1-5, **characterized in that** the profiled plate is manufactured from a plastic material.

9. Floor (1, 10) as claimed in any of the claims 1-8, **characterized in that** the cover layer comprises a pressed fibre material

10. Floor (1, 10) as claimed in any of the claims 1-8, **characterized in that** the cover layer comprises a plastic material.

11. Floor (1, 10) as claimed in any of the claims 1-8, **characterized in that** the cover layer comprises a sheet metal.

12. Floor (1, 10) as claimed in claim 1, **characterized in that** the edge profile (8) is provided with a downward extending longitudinal groove (9) for receiving an upright wall (11) therein.

13. Vehicle provided with a floor (1, 10) as claimed in claim 1, **characterized in that** the ribs (3, 30) extend transversely of the longitudinal direction of the vehicle.

## Patentansprüche

1. Boden (1, 10) für einen Laderaum eines Fahrzeugs, der ein Gefüge von einer im Gebrauchszustand horizontalen unteren Trägerschicht (2, 20) und einer darauf angeordneten oberen Abdeckschicht (4) umfasst, wobei die Trägerschicht (2, 20) eine Profilplatte umfasst, und diese Platte hat eine Struktur von parallelen Rippen (3, 30), um die Abdeckschicht (4) darauf ruhen zu lassen, **dadurch gekennzeichnet, dass** er mit einem sich entlang der Seite und über Randzonen der Ober- und Unterseite besagten Bodens (1, 10) in einer Richtung quer zu den Rippen (3, 30) erstreckenden Randprofil (8), das die Rippen (3, 30) an ihren Enden umschließt, versehen ist.

2. Boden (1) nach Anspruch 1, **dadurch gekennzeichnet, dass** die Rippen (3, 30) an ihrer Oberseite flach sind.

3. Boden (1) nach Anspruch 2, **dadurch gekennzeichnet, dass** die Profilplatte in einem zu den Rippen (3) senkrechten Querschnitt eine Rechteckwellenform hat.

4. Boden (10) nach Anspruch 2, **dadurch gekennzeichnet, dass** die Profilplatte in einem zu den Rippen (3) senkrechten Querschnitt ein abgestumpftes Zickzackprofil hat.

5. Boden nach einem der Ansprüche 1-4, **dadurch gekennzeichnet, dass** er ein Füllmaterial in von den Rippen (3, 30) und der Abdeckschicht (4) umschlossenen Räumen umfasst.

6. Boden (1, 10) nach einem der Ansprüche 1-5, **dadurch gekennzeichnet, dass** die Profilplatte aus Eisenblech hergestellt ist.

7. Boden (1, 10) nach einem der Ansprüche 1-5, **dadurch gekennzeichnet, dass** die Profilplatte aus Aluminium hergestellt ist.

8. Boden (1, 10) nach einem der Ansprüche 1-5, **dadurch gekennzeichnet, dass** die Profilplatte aus einem Kunststoffmaterial hergestellt ist.

9. Boden (1, 10) nach einem der Ansprüche 1-8, **dadurch gekennzeichnet, dass** die Abdeckschicht ein gepresstes Fasermaterial umfasst.

10. Boden (1, 10) nach einem der Ansprüche 1-8, **dadurch gekennzeichnet, dass** die Abdeckschicht ein Kunststoffmaterial umfasst.

11. Boden (1, 10) nach einem der Ansprüche 1-8, **dadurch gekennzeichnet, dass** die Abdeckschicht ein Metallblech umfasst.

12. Boden (1, 10) nach Anspruch 1, **dadurch gekennzeichnet, dass** das Randprofil (8) mit einer sich abwärts erstreckenden Längsrille (9) versehen ist, um darin eine aufrecht stehende Wand (11) aufzunehmen.

13. Mit einem Boden (1, 10) nach Anspruch 1 versehenes Fahrzeug, **dadurch gekennzeichnet, dass** die Rippen (3, 30) sich quer zu der Längsrichtung des Fahrzeugs erstrecken.

## Revendications

1. Sol (1, 10) pour l'espace de chargement d'un véhicule, comprenant un ensemble d'une couche de support inférieure horizontale (2, 20) dans la situation d'utilisation, et d'une couche de recouvrement supérieure (4) disposée sur celle-ci, la couche de support (2, 20) comprenant une plaque profilée, ladite plaque présentant une structure de nervures parallèles (3, 30) destinées à appuyer la couche de recouvrement (4) sur celle-ci, **caractérisé en ce que** le sol présente un profil de bord (8) s'étendant le long du côté et au-dessus des zones de bord du côté supérieur et du côté inférieur dudit sol (1, 10) dans une direction transversale aux nervures (3, 30), entourant les nervures (3, 30) à leurs extrémités.

2. Sol (1) selon la revendication 1, **caractérisé en ce que** les nervures (3, 30) sont plates sur leur côté supérieur.

3. Sol (1) selon la revendication 2, **caractérisé en ce que** la plaque profilée présente une section transversale en forme d'onde carrée perpendiculairement aux nervures (3).

4. Sol (10) selon la revendication 2, **caractérisé en ce que** la plaque profilée présente un profil de section transversale en forme en zig zag tronqué perpendiculairement aux nervures (3).

5. Sol selon l'une quelconque des revendications 1 à 4, **caractérisé en ce qu'**il comprend une matière de remplissage dans des espaces définis par les nervures (3, 30) et la couche de recouvrement (4).

6. Sol (1, 10) selon l'une quelconque des revendications 1 à 5, **caractérisé en ce que** la plaque profilée est fabriquée à partir d'une tôle de fer.

7. Sol (1, 10) selon l'une quelconque des revendications 1 à 5, **caractérisé en ce que** la plaque profilée est fabriquée à partir d'aluminium.

8. Sol (1, 10) selon l'une quelconque des revendications 1 à 5, **caractérisé en ce que** la plaque profilée est fabriquée à partir d'une matière plastique.

9. Sol (1, 10) selon l'une quelconque des revendications 1 à 8, **caractérisé en ce que** la couche de recouvrement comprend une matière fibreuse pressée.

10. Sol (1, 10) selon l'une quelconque des revendications 1 à 8, **caractérisé en ce que** la couche de recouvrement comprend une matière plastique.

11. Sol (1, 10) selon l'une quelconque des revendications 1 à 8, **caractérisé en ce que** la couche de recouvrement comprend une tôle métallique.

12. Sol (1, 10) selon la revendication 1, **caractérisé en ce que** le profil de bord (8) comporte une rainure longitudinale s'étendant vers le bas (9) destinée à recevoir en elle une paroi verticale (11).

13. Véhicule pourvu d'un sol (1, 10) selon la revendication 1, **caractérisé en ce que** les nervures (3, 30) s'étendent transversalement à la direction longitudinale du véhicule.
